## Europäisches Patentamt
## European Patent Office
## Office européen des brevets

(19)

(11) Veröffentlichungsnummer: **0 109 503**
**B1**

(12) **EUROPÄISCHE PATENTSCHRIFT**

(45) Veröffentlichungstag der Patentschrift:
02.07.86

(51) Int. Cl.⁴: **G 05 D 7/01, F 24 F 11/047**

(21) Anmeldenummer: 83109224.2

(22) Anmeldetag: 17.09.83

(54) Regelventil zum Konstanthalten des Volumenstromes, insbesondere in lufttechnischen Anlagen.

(30) Priorität: 21.10.82 DE 8229509 U

(43) Veröffentlichungstag der Anmeldung:
30.05.84 Patentblatt 84/22

(45) Bekanntmachung des Hinweises auf die Patenterteilung:
02.07.86 Patentblatt 86/27

(84) Benannte Vertragsstaaten:
AT BE CH DE FR GB IT LI LU NL SE

(56) Entgegenhaltungen:
DE-B-1 252 395
DE-C-1 160 154
DE-U-7 205 986
US-A-4 191 209

(73) Patentinhaber: Gebrüder Trox, GmbH, Heinrich-Trox- Platz 1, D-4133 Neukirchen- Vluyn (DE)

(72) Erfinder: Finkelstein, Wolfgang, Peschkenstrasse 3a, D-4133 Neukirchen- Vluyn (DE)
Erfinder: Haaz, Josef, Friesenweg 20, D-4133 Neukirchen- Vluyn (DE)

(74) Vertreter: Stark, Walter, Dr.- Ing., Moerser Strasse 140, D-4150 Krefeld (DE)

EP 0 109 503 B1

## Beschreibung

Die Erfindung betrifft ein Regelventil zum Konstanthalten des Volumenstroms in lufttechnischen Anlagen, mit einer Regelklappe, die in einem Strömungskanal schwenkbar gelagert und mittels eines reglergesteuerten Stellmotors verstellbar ist, mit einem stromaufwärts von der Regelklappe angeordneten Strömungsgleichrichter und mit einer im Strömungskanal angeordneten, auf die Strömungsgeschwindigkeit ansprechenden Meßsonde, die mit dem Regler wirkverbunden ist und in dem vom Strömungsgleichrichter beeinflußten Bereich angeordnet ist.

Derartige Regelventile werden auch als Volumenstromregler bezeichnet. Sie werden vorwiegend in lufttechnischen Anlagen, insbesondere Klimaanlagen, in großer Zahl eingesetzt. Sie sollen dafür sorgen, daß in den zu klimatisierenden Raum der erforderliche Volumenstrom innerhalb enger Toleranzen einströmt, und zwar unabhängig von Druckverhältnissen, Druckschwankungen und den jeweiligen Gestaltungen des Kanalsystems vor Eintritt in den Raum. Gerade die letztgenannten Abhängigkeiten führen häufig zu unerwünschten Veränderungen des Volumenstromes, der aufgrund einer Messung des Strömungsgeschwindigkeit im Strömungskanal bestimmt wird. Das Meßergebnis hängt aber auch vom Zustand der Strömung ab, der sich wiederum in Abhängigkeit von der Gestaltung und Konfiguration des Kanalsystems vor der Meßstelle einstellt.

Regelventile der eingangs beschriebenen Gattung bzw. Volumenstromregler sind in verschiedenen Ausführungsformen bekannt. Sie werden entweder mit elektrischer oder pneumatischer Hilfsenergie betrieben und verwenden Meßsonden, die entweder ein geschwindigkeits- oder druckabhängiges Signal abgeben, welches Grundlage für die Regelung des konstant zu haltenden Volumenstroms ist.

Problematisch bei allen Ausführungsformen ist, daß das Geschwindigkeitsprofil im Strömungskanal sich nach Maßgabe der jeweils vorgeschalteten Kanalabschnitte ändert, so daß ein fabrikmäßig vorgegebener Ort für die Meßsonde auch dann keine hinreichend definierte Grundlage für das Konstanthalten des Volumenstroms ist, wenn die Charakteristik der Meßsonde im einzelnen bekannt ist und der Regler darauf eingestellt ist.

Das gilt grundsätzlich auch für eine bekannte Ausführung der eingangs beschriebenen Gattung (US-A-41 91 209), bei der der Strömungsgleichrichter eine schwenkbare Düse ist, die so ausgerichtet wird, daß der Düsenstrahl auf die in Strömungsrichtung nachgeschaltete Meßsonde gerichtet ist. Damit wird die Strömung konzentriert, die Strömungsgeschwindigkeit erhöht und werden im übrigen die Druckverhältnisse im Strömungskanal in unübersichtlicher Weise geändert. Eine gleichmäßige Geschwindigkeitsverteilung im Strömungskanal kann damit nicht erreicht werden. Grundsätzlich ist es auch bekannt (DE-B-12 52 395), Luft durch eine mit Drosselöffnungen versehene Metallplatte in einen Raum eintreten zu lassen, um dadurch praktisch über den gesamten Querschnitt gleichen Druck zu erhalten.

Der Erfindung liegt die Aufgabe zugrunde, ein Regelventil der eingangs beschriebenen Gattung anzugeben, mit dem der Volumenstrom in engen Toleranzen konstantgehalten werden kann, und zwar unabhängig von dem Aufbau und der Konfiguration des vorgeschalteten Kanalsystems und der fabrikmäßig eingebauten sowie eingestellten Meßsonde.

Diese Aufgabe wird dadurch gelöst, daß der Strömungsgleichrichter ein Turbulenzgitter aus zwei unter einem stromaufwärts offenen Winkel angeordneten Teilgittern ist.

Bei der Erfindung wird unmittelbar vor der Meßsonde dafür gesorgt, daß die Geschwindigkeitsverteilung über dem Querschnitt des Strömungskanals vergleichmäßigt wird. Dazu dienen die beiden als Strömungsgleichrichter wirkenden und unter einem Winkel zueinander angeordneten Teilgitter, die alle Turbulenzballen oder ungleichförmigen Geschwindigkeitsverteilungen, die aus Konfigurationen des Strömungskanals vor der Meßstelle herrühren, auffangen und in eine gleichmäßigere Geschwindigkeitsverteilung umsetzen, so daß hinter dem Turbulenzgitter nicht nur eine gleichmäßige Geschwindigkeitsverteilung, sondern auch eine gleichmäßige Druckverteilung herrscht. Damit ist es möglich, beliebige Meßsonden einzusetzen, z.B. auch Prandtl-Rohre, bei denen nicht nur die Geschwindigkeit, sondern auch der Druck der Strömung gemessen wird.

Die Teilgitter können insbesondere einen spitzen Winkel miteinander bilden. Besonders günstige Verhältnisse erzielt man dann, wenn die Teilgitter eben sind und ihre Berührungslinie sich parallel zur Achse der Regelklappe erstreckt. Ebene Teilgitter lassen sich einfach herstellen und ohne Schwierigkeiten in einen entsprechenden Strömungskanal einbauen. Wenn darüber hinaus ihre Berührungslinie sich parallel zur Achse der Regelklappe erstreckt, entsteht stromabwärts des Turbulenzgitters ein Geschwindigkeitsprofil, das die Messung der Geschwindigkeit praktisch unabhängig vom Ort der Meßsonde ermöglicht.

Die beschriebenen Effekte werden auch dann erreicht, wenn die Teilgitter den Strömungskanalquerschnitt nur teilweise abdecken, wobei es dann allerdings zweckmäßig ist, die Meßsonde im Strömungsschatten des Turbulenzgitters anzuordnen.

Auf jeden Fall kann der Abstand des Turbulenzgitters bzw. der Berührungslinie von der Achse der Regelklappe kleiner als der Durchmesser des Strömungskanals sein. Damit erreicht, man eine sehr kurze Baulänge des Volumenstromreglers insgesamt, so daß dieser auch unmittelbar hinter Krümmern, Abzweigungen oder dergleichen ohne Beeinträchtigung der Regelung des Volumenstromes eingesetzt werden kann.

Die Meßsonde selbst kann auf der stromaufwärts gewandten Seite der Regelklappe angeordnet sein, wobei lediglich im Falle der verwendung von Teilgittern, die nicht den vollen Strömungsquerschnitt abdecken, darauf zu achten ist, daß die Meßsonde im Strömungsschatten des Turbulenzgitters liegt.

Man kann die Meßsonde aber auch zwischen dem Turbulenzgitter und der Regelklappe anordnen, Überraschenderweise hat sich gezeigt, daß selbst dann zuverlässige Meßergebnisse erreicht werden, wenn die Meßsonde stromaufwärts vor dem Turbulenzgitter im von den beiden Teilgittern gebildeten Winkelraum angeordnet ist.

Grundsätzlich kann die Geschwindigkeit mit an sich bekannten Meßsonden, wie einem Pitot-Rohr, einem Prandtl-Rohr, einem Hitzdraht-Anemometer oder einem pneumatischen Freistrahlverstärker mit proportionaler Kennlinie gemessen werden.

Stromabwärts von der Regelklappe kann ein Gleichrichter angeordnet sein, der insbesondere sich nur teilweise über den Strömungsquerschnitt erstreckt und die Aufgabe hat, das Geschwindigkeitsprofil am Austritt des Regelventils zu vergleichmäßigen, Störeinflüsse, die durch die Regelklappe selbst erzeugt werden, zu beseitigen und das bei der Drosselstellung der Regelklappe entstehende Strömungsgeräusch zu reduzieren. Darüber hinaus beeinflußt der Gleichrichter auch die Genauigkeit des Meßsignals der Meßsonde günstig.

Im folgenden werden in der Zeichnung dargestellte Ausführungsbeispiele der Erfindung erläutert; es zeigen:

Fig. 1 in schematischer Darstellug ein Regelventil zum Konstanthalten des Volumenstromes in einer Klimaanlage,

Fig. 2 eine andere Ausführung des Gegenstandes nach Fig. 1,

Fig. 3 in schematischer Darstellung einen Querschnitt durch eine Meßsonde.

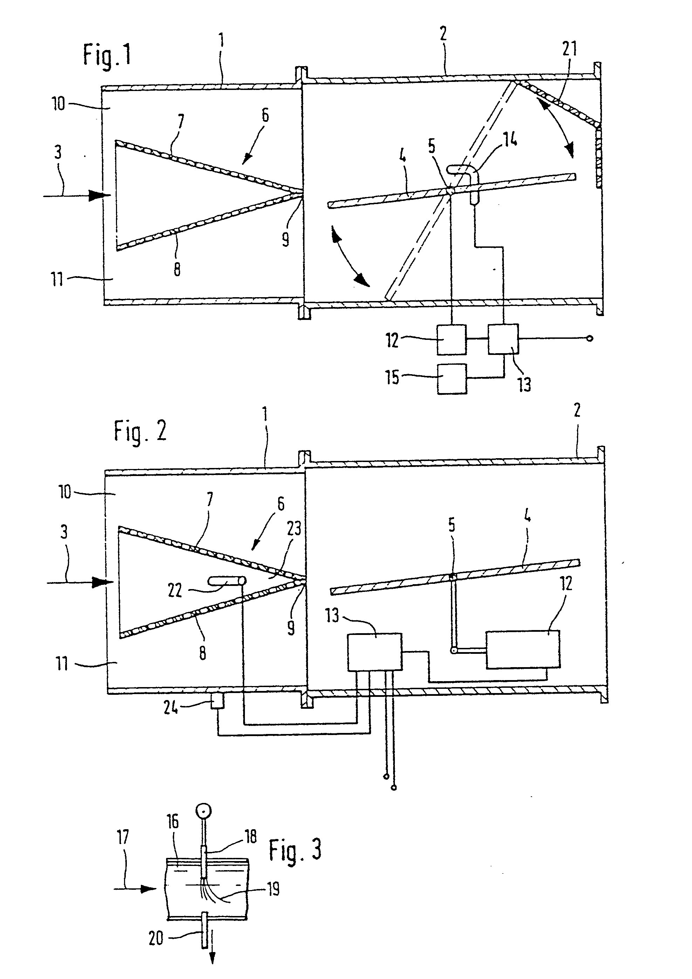

Zu dem in Fig. 1 dargestellten Regelventil gehören zwei miteinander verbundene Kanalabschnitte 1,2. Die Kanalabschnitte 1,2 können einen kreisförmigen oder rechteckigen bis quadratischen Strömungsquerschnitt besitzen. Die Strömungsrichtung ist durch einen Pfeil 3 angegeben. Im stromabwärtsliegenden Kanalabschnitt 2 ist eine Regelklappe 4 gelagert, die um eine symmetrisch zum Kanalquerschnitt angeordnete horizontale Achse 5 schwenkbar ist. Die Achse 5 ist auch bezüglich der Regelklappe 4 symmetrisch angeordnet. Mit strichpunktierten Linien ist der Schwenkbereich der Regelklappe 4 angedeutet.

Der Kanalabschnitt 1 nimmt ein Turbulenzgitter 6 auf, welches beim dargestellten Ausführungsbeispiel aus zwei Teilgittern 7,8 besteht, die unter einem stromaufwärts offenen spitzen Winkel zueinander angeordnet sind. Der Winkel zwischen den beiden Teilgittern 7,8 beträgt beim dargestellten Ausführungsbeispiel ca. 33°. In der Kanalmitte treffen sich die beiden Teilgitter 7,8 längs einer Berührungslinie 9, die sich parallel zur Achse 5 der Regelklappe 4 und ebenfalls in der Mitte des Kanalabschnitts 1 erstreckt. Der Abstand der Berührungslinie 9 von der Achse 5 ist kleiner als der Durchmesser bzw. eine signifikante Abmessung des Querschnitts des Kanalabschnitts 2.

Wie dargestellt enden die Teilgitter 7,8 im Abstand vor ihren zugeordneren Wandungen des Kanalabschnitts 1, so daß zwischen den freien Enden der Teilgirrer 7,8 und den zugeordneten Kanalwandungen gitterfreie Querschrittsbereiche 10,11 verbleiben.

Die Regelklappe 4 ist über ein nicht dargestelltes Gestänge mit einem Stellmotor 12 verbunden, der seinerseirs Steuerimpulse von einem Regler 13 erhält, die dieser nach Maßgabe eines Meßsignals abgibt, die von einer Meßsonde 14 geliefert werden. Außerdem besitzt der Regler einen weiteren Eingang für Signale, beispielsweise eines Thermostaten 15.

Die Meßsonde 14 ist bei dem in Fig. 1 dargestellten Ausführungsbeispiel auf der stromaufwärts gewandten Seite der Regelklappe 4 angeordnet. Zeichnerisch ist angedeutet, daß die Meßsonde 14 ein Prandtl-Rohr ist, mit welchem einerseits der Gesamtdruck und andererseits der statische Druck der Strömung gemessen wird und gleichzeitig die Differenz beider Drücke gebildet wird, so daß das Meßsignal ein Maß für die Strömungsgeschwindigkeit ist.

Bei einer nicht dargestellten Ausführung kann die Meßsonde 14 auch ein Hitzdraht-Anemometer sein. Die Meßsonde 14 kann aber auch nach Art eines pneumatischen Freistrahlverstärkers mit proportionaler Kennlinie aufgebaut sein, wie das in Fig. 3 angedeutet ist. Dann besitzt die Meßsonde 14 einen in Strömungsrichtung offenen Kanal 16, in den quer zur Strömungsrichtung 17 über eine Düse 18 ein Preßluftstrahl 19 eingeblasen wird, der von der Strömung mehr oder weniger abgelenkt wird, so daß eine gegenüber der Düse 18 angeordnete Empfängerdüse 20 dementsprechend ein mehr oder weniger starkes Drucksignal liefern kann, welches ein Maß für die Strömungsgeschwindigkeit ist.

Das dargestellte Regelventil benötigt nur eine sahr kurze Baulänge. Aufgrund der Wirkung des der Regelklappe 4 vorgeschalteten Turbulenzgitters 6 wird auch dann hinter dem Turbulenzgitter 6 eine sehr gleichmäßige Geschwindigkeitsverteilung über dem Kanalquerschnitt erhalten, wenn das vorgeschaltete Kanalsystem in kurzem Abstand vor dem Regelventil Krümmer, Abzweigungen und dergleichen, - jedenfalls keine längeren Beruhigungsstrecken - aufweist.

In Fig. 1 ist noch dargestellt, daß stromabwärts der Regelklappe in kurzem Abstand von der Regelklappe 4 ein Gleichrichter 21 vorgesehen ist, der praktisch unmittelbar hinter der Regelklappe 4 angeordnet ist. Dieser Gleichrichter 21 erstreckt sich beim dargestellten Ausführungsbeispiel nur über den oberen Bereich des Kanalabschnitts 2. Er soll die durch die Regelklappe 4 gestörte Strömung so beeinflussen, daß das Geschwindigkeitsprofil am Austritt des Kanalabschnitts 2 wieder vergleichmäßigt wird und daß entstehende Strömungsgeräusche reduziert werden. Insbesondere kann das akustische Spektrum so verändert werden, daß niederfrequente Geräusche um 5 bis 10 dB reduziert werden. Außerdem beeinflußt der Gleichrichter auch die Genauigkeit des Meßsignals der Meßsonde 14.

In Fig. 2 bezeichnen gleiche Bezugszeichen gleiche Teile. Der Aufbau des Regelventils ist grundsätzlich so, wie oben beschrieben. Anders ist lediglich die Anordnung der Meßsonde 14, die beim Ausführungsbeispiel nach Fig. 2 ein Pitot-Rohr 22 ist, welches im Winkelraum 23 zwischen den beiden Teilgittern 7,8 angeordnet ist. Da das Pitot-Rohr 22 nur den Gesamtdruck der Strömung mißt, ist in der Wandung des Kanalabschnittes 1 eine weitere Meßstelle 24 zur Messung des statischen Strömungsdrucks vorgesehen. Von beiden Meßstellen 22, 24 gehen Leitungen zum Regler 13, der die Druckdifferenz bildet. Da die Verbindung zwischen den Meßstellen 22 und 24 einerseits und dem Regler 13 andererseits über Leitungen erfolgt, können die Meßstellen 22, 24 auch an ein nicht dargestelltes Manometer angeschlossen werden, mit dem eine unmittelbare Kontrolle des Volumenstromes möglich ist. Dadurch wird u.a. auch der Nachweis des Volumenstromes bei Abnahmemessungen mit hoher Genauigkeit möglich.

**Patentansprüche**

1. Regelventil zum Konstanthalten des Volumenstroms in lufttechnischen Anlagen, mit einer Regelklappe (4), die in einem Strömungskanal (1, 2) schwenkbar gelagert und mittels eines reglergesteuerten Stellmotors (12) verstellbar ist, mit einem stromaufwärts von der Regelklappe (4) angeordneten Strömungsgleichrichter (6,) und mit einer im Strömungskanal (1, 2) angeordneten, auf die Strömungsgeschwindigkeit ansprechenden Meßsonde (14, 22), die mit dem Regler (13) wirkverbunden ist, und in dem vom Strömungsgleichrichter beeinflußten Bereich angeordnet ist stromaufwärts von der Regelklappe (4) angeordneten Strömungsgleichrichter (6) dadurch gekennzeichnet, daß der Strömungsgleichrichter ein Turbulenzgitter (6) aus zwei unter einem stromaufwärts offenen Winkel angeordneten Teilgittern (7, 8) ist.

2. Regelventil nach Anspruch 1, dadurch gekennzeichnet, daß die Teilgitter (7, 8) einen spitzen Winkel miteinander bilden.

3. Regelventil nach Anspruch 1 oder 2, dadurch gekennzeichnet, daß die Teilgitter (7, 8) eben sind und ihre Berührungslinie (9) sich parallel zur Achse (5) der Regelklappe (4) erstreckt.

4. Regelventil nach einem der Ansprüche 1 - 3, dadurch gekennzeichnet, daß die Teilgitter (7, 8) den Strömungskanalquerschnitt nur teilweise abdecken.

5. Regelventil nach einem der Ansprüche 1 - 4, dadurch gekennzeichnet, daß der Abstand des Turbulenzgitters (6) bzw. der Berührungslinie (9) von der Achse (5) der Regelklappe (4) kleiner als der Durchmesser des Strömungskanals (2) ist.

6. Regelventil nach einem der Ansprüche 1 - 5, dadurch gekennzeichnet, daß die Meßsonde (14) auf der stromaufwärts gewandten Seite der Regelklappe (4) angeordnet ist.

7. Regelventil nach einem der Ansprüche 1 - 5, dadurch gekennzeichnet, daß die Meßsonde (14) zwischen dem Turbulenzgitter (6) und der Regelklappe (4) angeordnet ist.

8. Regelventil nach einem der Ansprüche 1 - 5, dadurch gekennzeichnet, daß die Meßsonde (14) stromaufwärts vor dem Turbulenzgitter (6) im von den beiden Teilgittern (7, 8) gebildeten Winkelraum (23) angeordnet ist.

9. Regelventil nach einem der Ansprüche 1 - 8, dadurch gekennzeichnet, daß die Meßsonde ein Pitot-Rohr ist.

10. Regelventil nach einem der Ansprüche 1 - 8, dadurch gekennzeichnet, daß die Meßsonde (14) ein Prandtl-Rohr ist.

11. Regelventil nach einem der Ansprüche 1 - 8, dadurch gekennzeichnet, daß die Meßsonde (14) ein Hitzdraht-Anemometer ist.

12. Regelventil nach einem der Ansprüche 1 - 8, dadurch gekennzeichnet, daß die Meßsonde (14) ein pneumatischer Freistrahlverstärker (16 - 20) mit proportionaler Kennlinie ist.

13. Regelventil nach einem der Ansprüche 1 - 12, dadurch gekennzeichnet, daß stromabwärts der Regelklappe (4) ein weiterer Gleichrichter (21) angeordnet ist.

14. Regelventil nach Anspruch 13, dadurch gekennzeichnet, daß der weitere Gleichrichter (21) sich nur teilweise über den Strömungskanalquerschnitt erstreckt.

**Claims**

1. A regulating valve for keeping constant the volumetric flow in aerodynamic plants, having a regulating flap (4) which is pivotably mounted in a flow duct (1. 2) and is displaceable by means of a governor-controlled servo-motor (12), a flow straightener (6) arranged upstream of the regulating flap (4), and a measuring probe (14, 22). which is disposed in the flow duct (1, 2) and responds to the flow velocity and which is operatively connected to the governor (13) and is disposed in the region affected by the flow straightener (6), characterized in that the flow straightener is a turbulence grid (6) comprising two partial grids (7, 8) arranged at an angle opening upstream.

2. A regulating valve according to Claim 1, characterized in that the partial grids (7, 8) form an acute angle with one another.

3. A regulating valve according to Claim 1 or 2, characterized in that the partial grids (7, 8) are flat and their line of contact (9) extends parallel to the shaft (5) of the regulating flap (4).

4. A regulating valve according to any one of Claims 1 to 3, characterized in that the partial grids (7, 8) cover the flow duct cross-section only in part.

5. A regulating valve according to any one of Claims 1 to 4, characterized in that the distance of the turbulence grid (6) or the line of contact (9) from the shaft (5) of the regulating flap (4) is less than the diameter of the flow duct (2).

6. A regulating valve according to any one of Claims 1 to 5, characterized in that the measuring probe (14) is arranged on the side of the regulating flap (4) facing upstream.

7. A regulating valve according to any one of Claims 1 to 5, characterized in that the measuring probe (14) is arranged between the turbulence grid (6) and the regulating flap (4).

8. A regulating valve according to any one of Claims 1 to 5, characterized in that the measuring probe (14) is arranged upstream of the turbulence grid (6) in the angular space (23) formed by the two partial grids (7, 8).

9. A regulating valve according to any one of Claims 1 to 8, characterized in that the measuring probe is a pitot tube.

10. A regulating valve according to any one of Claims 1 to 8, characterized in that the measuring probe (14) is a Prandtl's pitot tube.

11. A regulating valve according to any one of Claims 1 to 8, characterized in that the measuring probe (14) is a hot wire anemometer.

12. A regulating valve according to any one of Claims 1 to 8, characterized in that the measuring probe (14) is a pneumatic free-jet amplifier (16 to 20) with a proportional characteristic curve.

13. A regulating valve according to any one of Claims 1 to 12, characterized in that an additional straightener (21) is arranged downstream of the regulating flap (4).

14. A regulating valve according to Claim 13, characterized in that the additional straightener (21) extends only partly over the flow duct cross-section.

**Revendications**

1. Valve de régulation pour maintenir constant le débit volumétrique dans des installations d'aérage, munie d'un volet de réglage (4) qui est monté de manière à pouvoir pivoter dans un canal d'écoulement (1, 2) et peut être réglé au moyen d'un servomoteur (12) commandé par regulateur d'un redresseur d'écoulement (6) disposé en amont du volet de réglage (4) et d'une sonde de mesure (14,22) disposée dans le canal d'écoulement (1, 2), répondant à la vitesse d'écoulement, qui est en liaison fonctionnelle avec le régulateur (13) et est disposée dans la région influencée par le redresseur d'écoulement, caractérisée en ce que le redresseur d'écoulement est une grille de turbulence (6) formée de deux grilles partielles (7, 8) disposées sous un angle ouvert vers l'amont.

2. Valve de régulation selon la revendication 1, caractérisée en ce que les grilles partielles (7, 8) font entre elles un angle aigu.

3. Valve de régulation selon l'une des revendications 1 et 2, caractérisée en ce que les grilles partielles (7, 8) sont planes, et en ce que leur ligne de contact (9) s'étend parallèlement à l'axe (5) du volet de réglage (4).

4. Valve de régulation selon l'une des revendications 1 à 3, caractérisée en ce que les grilles partielles (7, 8) ne recouvrent que partiellement la section du canal d'écoulement.

5. Valve de régulation selon l'une des revendications 1 à 4, caractérisée en ce que la distance de la grille de turbulence (6) ou de la ligne de contact (9) à l'axe (5) du volet de réglage (4) est plus petite que le diamètre du canal d'écoulement (2).

6. Valve de regulation selon l'une des revendications 1 à 5, caractérisée en ce que la sonde de mesure (14) est disposée du côté du volet de réglage (4) qui est tourné vers l'amont.

7. Valve de régulation selon l'une des revendications 1 à 5, caractérisée en ce que la sonde de mesure (14) est disposée entre la grille de turbulence (6) et le volet de réglage (4).

8. Valve de régulation selon l'une des revendications 1 à 5, caractérisée en ce que la sonde de mesure (14) est disposée en amont avant la grille de turbulence (6), dans l'espace angulaire (23) formé par les deux grilles partielles (7, 8).

9. Valve de régulation selon l'une des revendications 1 à 8, caractérisée en ce que la sonde de mesure est un tube de Pitot.

10. Valve de régulation selon l'une des revendications 1 à 8, caractérisée en ce que la sonde de mesure (14) est un tube de Prandtl.

11. Valve de régulation selon l'une des revendications 1 à 8, caractérisée en ce que la sonde de mesure (14) est un anémomètre à résistance électrique.

12. Valve de régulation selon l'une des revendications 1 à 8, caractérisée en ce que la sonde de mesure (14) est un amplificateur pneumatique à jet libre (16 à 20) à caractéristique proportionnelle.

13. Valve de régulation selon l'une des revendications 1 à 12, caractérisée en ce qu'en aval du volet de réglage (4) est disposé un autre redresseur (21).

14. Valve de régulation selon la revendication 13, caractérisée en ce que l'autre redresseur (21) ne s'étend que partiellement sur la section du canal d'écoulement.

Fig.1

Fig. 2

Fig. 3